# EUROPEAN PATENT APPLICATION

(11) **EP 0 842 614 A2**
(43) Date of publication of application: **20.05.1998**
(21) Application number: 97309314.9
(22) Date of filing: 19.11.1997
(51) Int. Cl.: A23N 12/02, A47J 43/24

(54) **An improved method of washing fruit or vegetables**

(30) Priority: 19.11.1996 KR 9655478
(71) Applicant: Samsung Electronics Co., Ltd., Suwon City, Kyungki-do (KR)
(72) Inventor: Kim, Sinyong, Suwon City, Kyungki-do (KR)
(74) Representative: Read, Matthew Charles

(57) **Abstract**

A method of cleaning fruit or vegetables prior to consumption is disclosed, and includes the steps of placing the fruit or vegetables in a dishwasher and operating the dishwasher to wash the fruit or vegetables to prepare them for consumption.

A dishwasher configured to perform the method is also disclosed and is operative to perform a cleaning cycle configured to clean fruit or vegetables prior to consumption.

## Description

The present invention relates to an improved method of washing fruit or vegetables.

In accordance with the invention, it has been appreciated that a dishwasher ordinarily used to wash dishes, can be used to wash fruit and vegetables.

In accordance with the invention there is provided a method of cleaning fruit or vegetables prior to consumption, comprising placing the fruit or vegetables in a dishwasher and operating the dishwasher to wash the fruit or vegetables to prepare them for consumption.

A conventional dishwasher includes a chamber having a basket in which bowls, plates and cutlery etc. are placed to be washed. A spray nozzle is supplied with clean water by a pump and directs it towards the basket. The clean water is heated by a heater installed beneath the chamber to increase the efficiency and cleaning ability of the dishwasher.

A drawback with conventional dishwashers is that they can only be used to wash dishes etc. and cannot also be used to wash other articles such as fruits or vegetables because the hot water used by the dishwasher during a cleaning cycle can damage or adversely effect their nutritive elements, flavour and freshness.

In a preferred embodiment, the dishwasher is operable in a plurality of different modes, at least one of which is for washing dishes and another of which is for washing fruit and/or vegetables, and the method includes the step of selecting the mode for fruit or vegetables.

Preferably, the dishwasher continuously washes the fruit or vegetables with water and monitors when pollution in the water drops below a given level.

According to the invention, there is also provided a dishwasher configured to perform the method, operative to perform a cleaning cycle configured to clean fruit or vegetables prior to consumption.

Preferably, the dishwasher includes a mode selector operative to select either a washing cycle for dishes or said cleaning cycle for fruit or vegetables.

The dishwasher of the present invention advantageously includes means for sensing the presence of dirt in the water, the control means being operable to terminate the cleaning cycle if the amount of dirt present in the water does not exceed a preset reference value.

In a preferred embodiment the dishwasher includes a heater for heating water to within a preset temperature range dependent on the mode selected.

Preferably, the dishwasher includes a sensor for detecting the temperature of the water, the control means being operable to supply an electrical current to the heater if the temperature determined by the sensor is below the preset temperature range for the selected mode.

Conveniently, the dishwasher includes means for generating an alarm signal when the temperature detected by the temperature sensor is outside the preset range for the selected mode.

Preferably, the dishwasher includes a spray nozzle rotatably mounted within the chamber and means for supplying the water to the nozzle during the cleaning cycle.

An embodiment of the present invention will now be described, by way of example only, with reference to the accompanying drawings, in which:
Figure 1 schematically shows a section through a dishwasher according to an embodiment of the present invention;
Figure 2 is a control block diagram for the dishwasher illustrated in Figure 1; and
Figure 3 is a control block diagram to show how the dishwasher may be used to clean fruit.

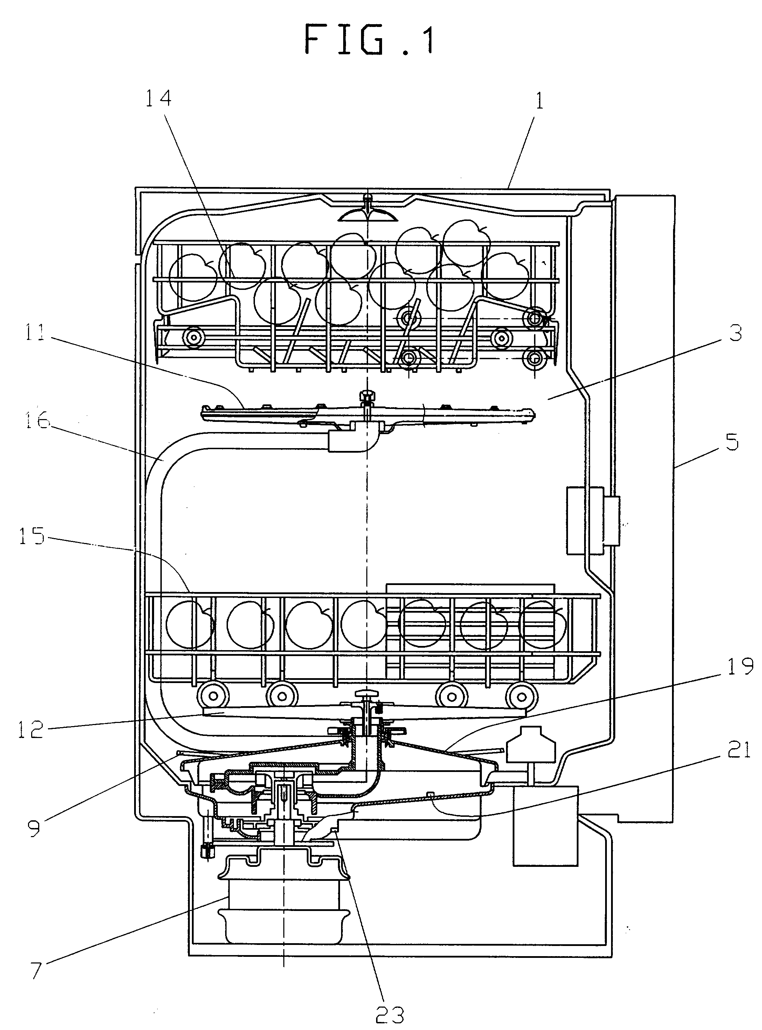

Referring to Figure 1, a dishwasher includes a housing 1 defining a chamber 3, a pair of baskets 14,15 installed at upper and lower locations within the chamber 3 for supporting and retaining articles to be cleaned and a pair of spray nozzles 11 and 12 rotatably mounted beneath each of the baskets 14 and 15.

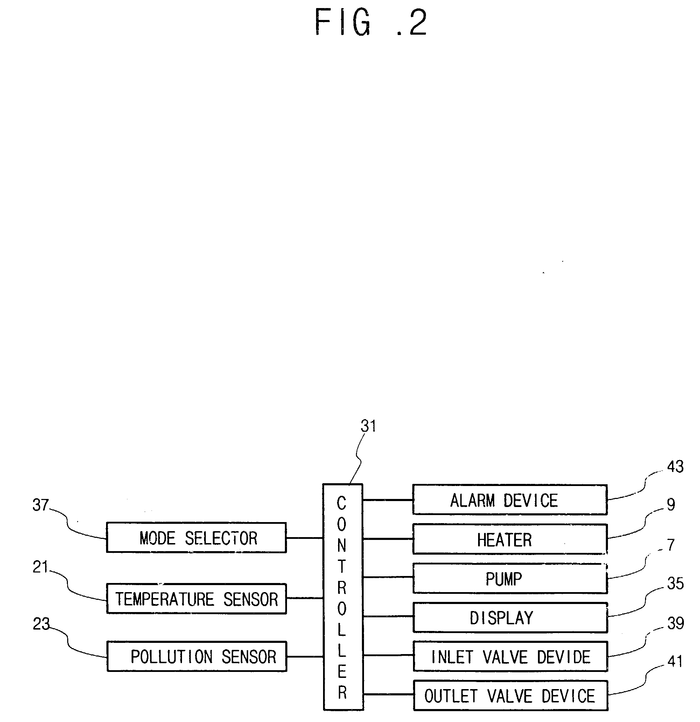

The front of the chamber 3 is provided with a door 5 to enable it to be opened to provide access thereto and to enable it to be closed during operation of the dishwasher. A water container 19 for storing cleaning water is installed beneath the chamber 3 and is provided with an inlet valve device (39 in Figure 2) to enable water to be supplied to the water container 19 and from an outside source, and an outlet valve device (41 in Figure 2) through which the cleaning water can be discharged from the water container 19. A pump 7 is installed beneath the water container 19 to supply the respective nozzles 11 and 12 with cleaning water from the water container 19. A heater 9 is installed in the vicinity of the water container 19 to control the temperature of the cleaning water in the water container 19.

Some of the cleaning water is supplied by the pump 7 to the lower nozzle 12 and the rest is supplied to the upper nozzle 11 through a feed pipe 16 which extends between the upper and lower nozzles 11 and 12. The pressure of the water supplied to the nozzles 11 and 12 and the orientation of the spray holes through which the water is ejected causes the spray nozzles 11 and 12 to rotate so as to spray the cleaning baskets 14,15 with water.

A temperature sensor 21 for detecting the temperature of the cleaning water in the water container 19 and a pollution sensor 23 for detecting dirt in the cleaning water in the water container 19 and also installed beneath the water container 19.

As shown in Figure 2, the dishwasher further includes a mode selector 37 for selecting either a 'dish cleaning mode' or a 'fruit cleaning mode' according to the user's requirements and a controller 31 for controlling operation of the pump 7, the heater 9, the inlet valve device 39 and the outlet valve device 41 according to a control program stored therein, corresponding to a selected mode, to make the dishwasher perform the required cleaning operation. The dishwasher may have additional or alternative cleaning modes if required.

The temperature sensor 21 detects the temperature of the cleaning water in the water container 19 and transmits a signal indicative of the detected temperature to the controller 31. When the temperature is outside a preset temperature range in any selected mode, the controller 31 generates an alarm through an alarm device 43 and at the same time halts the cleaning operation. The controller 31 then subsequently controls the outlet valve device 41 to discharge the cleaning water from the water container 19 and controls the heater 9, the pump 7 and the inlet valve device 39 to supply new cleaning water to the water container 19 so that the cleaning water in the water container 19 can be heated to the required temperature. When the temperature of the cleaning water in the water container 19 is within the preset range in the selected mode, the cleaning operation recommences.

The pollution sensor 23 detects how dirty the cleaning water in the water container 19 becomes and transmits a pollution level signal to the controller 31 which determines whether the cleaning water in the water container 19 should be discharged depending on the pollution level signal. The pollution sensor 23 includes a light emitting element (not shown) and a light receiving element (not shown) which are disposed opposite to and facing each other in the water container 19. The amount of light which reaches the light receiving element from the light emitting element determines how dirty the water is.

The controller 31 also displays information such as a selected cleaning mode and other operating conditions on a display 35.

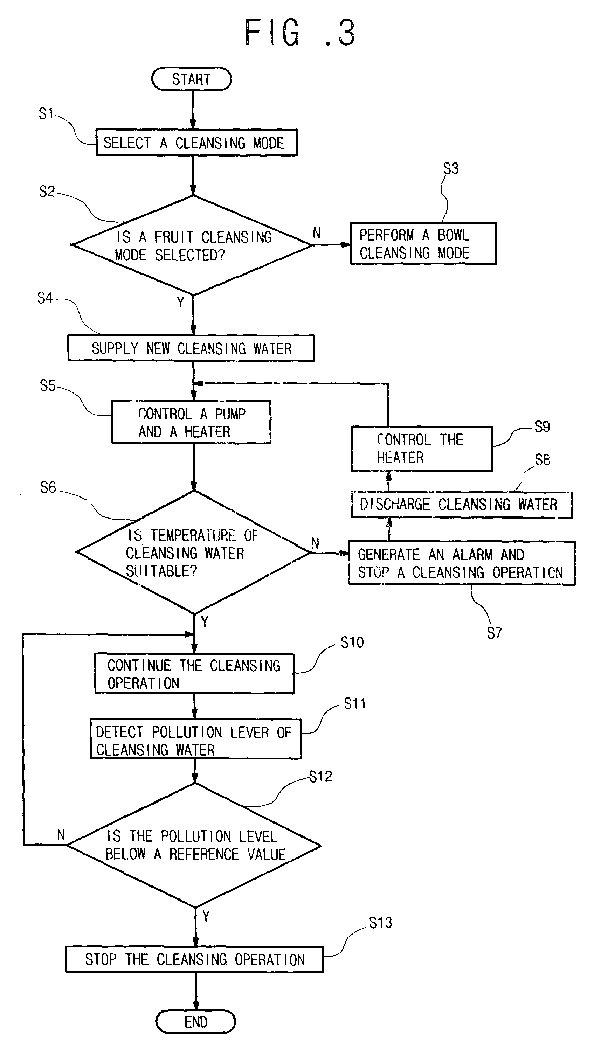

A method of using the dishwasher to clean fruit will now be described with reference to Figure 3.

Firstly, the user selects a cleaning mode via the mode selector 37 (step S1) and the controller 31 confirms whether the selected mode is the 'fruit cleaning mode' or the 'bowl cleaning mode' (step S2). If the bowl cleaning mode is selected, the bowl cleaning operation is performed according to the control program (step S3). If the fruit cleaning mode is selected, new cleaning water is supplied to the water container 19 through the inlet valve device 39 (step S4). Then, the controller 31 controls the heater 9 so that the cleaning water in the water container 19 reaches the required temperature and then controls the pump 7 to supply the cleaning water to the spray nozzles 11 and 12 (step S5). The controller varies the current applied to the heater to vary the temperature of the cleaning water. The heater 9 may operate intermittently or stop to enable cold cleaning water to be supplied.

The temperature sensor 21 detects the temperature of the cleaning water and the controller operates the heater if the temperature of the cleaning water is too low (step S6). If the temperature of the cleaning water exceeds the required temperature, the controller 31 generates an alarm through the alarm device 43 and stops the cleaning operation to prevent damage to the fruit to be cleaned (step S7). The cleaning water is then discharged through the outlet valve device 41 and new cleaning water is supplied to the water container 19 through the processes as in the steps S4 and S5. If the temperature of the cleaning water is now within the required range or becomes so after operation of the heater 9, the cleaning operation continues.

A process for rinsing the fruit is also included in which the pollution sensor 23 detects the amount of dirt in the cleaning water (step S11) and the controller 31 confirms whether the detected amount of dirt is below a reference value (step S12). If it is, the cleaning operation is completed and the cleaning operation stops accordingly (step S13). If not, the dirty cleaning water is discharged and new cleaning water is supplied to the water container 19 and the cleaning operation is continued.

As described above, according to the embodiment of the invention, the cleaning of fruit and the cleaning of dishes can be selectively performed, as required.

## Claims

1. Use of a dishwasher to clean fruit and/or vegetables prior to consumption.

2. A method of cleaning fruit or vegetables prior to consumption, comprising placing the fruit of vegetables in a dishwasher, and operating the dishwasher to wash the fruit or vegetables to prepare them for consumption.

3. A method according to claim 2, wherein the dishwasher is operable in a plurality of different modes, at least one of which is for washing dishes and another of which is for washing fruit and/or vegetables, including selecting the mode for fruit or vegetables.

4. A method according to claim 2 or 3 including continuously washing the fruit or vegetables with water, and monitoring when pollution in the water drops below a given level.

5. A dishwasher configured to perform a method according to claim 3 or 4, operative to perform a cleaning cycle configured to clean fruit or vegetables prior to consumption.

6. A dishwasher according to claim 5 including a mode selector operative to select either a washing cycle for dishes or said cleaning cycle for fruit or vegetables.

7. A dishwasher according to claim 5 or 6 comprising means for sensing the presence of dirt in the water, and control means (31) operable to terminate the cleaning cycle if the amount of dirt present in the water does not exceed a preset reference value.

8. A dishwasher according to claim 6 or 7 including a heater (9) for heating water to within a preset temperature range dependent upon the mode selected.

9. A dishwasher according to claim 8 comprising a sensor (21) for detecting the temperature of the water, the control means (31) being operable to supply an electrical current to the heater (9) if the temperature determined by the sensor (21) is below the present temperature range for the selected mode.

10. A dishwasher according to claim 9, comprising means (43) for generating an alarm signal when the temperature detected by the temperature sensor (21) is outside the preset range for the selected mode.

11. A dishwasher according to any of claims 4 to 7 including a spray nozzle (11,12) rotatably mounted within the chamber (3) and means (7) for supplying the water to the spray nozzle (11,12) during the cleaning cycle.

12. A bowl cleaning device comprising a cabinet for forming a cleaning room, a cleaning basket installed inside said cleaning room, for loading therein articles to be cleaned, a spray nozzle for spraying cleaning water to the articles loaded in said cleaning basket, a pump for supplying the cleaning water to said spray nozzle, a heater for heating the cleaning water, a mode selector for selecting one of a plurality of modes including a bowl cleaning mode and a fruit cleaning mode, and a controller for controlling said heater so that the cleaning water has a temperature suitable for the cleaning mode selected through said mode selector.

13. A bowl cleaning device as claimed in claim 12 further comprising a temperature sensor for detecting the temperature of the cleaning water, wherein said controller controls said heater according to the detected temperature of the cleaning water.

14. A bowl cleaning device as claimed in claim 13 further comprising an alarm device for generating an alarm when the detected temperature of the cleaning water is out of a preset admissible range with respect to the selected mode.

15. A bowl cleaning device as claimed in claim 12 wherein if the fruit cleaning mode is selected, said heater does not operate so that cold cleaning water is supplied to said spray nozzle.

16. A bowl cleaning device as claimed in claim 12 further comprising a pollution sensor for detecting the pollution level of the cleaning water in said water container, wherein if the detected pollution level is below a preset reference value after a cleaning operation, said controller determines that the cleaning operation is completed and stops the cleaning operation.

17. A fruit cleaning method using a bowl cleaning device including a cabinet for forming a cleaning room, a cleaning basket installed inside said cleaning room, for loading therein articles to be cleaned, a spray nozzle for spraying cleaning water to the articles loaded in said cleaning basket, a pump for supplying the cleaning water to said spray nozzle, and a heater for heating the cleaning water, and a mode selector for selecting one of a plurality of modes including a bowl cleaning mode and a fruit cleaning mode comprising the steps of selecting the fruit cleaning mode through said mode selector, controlling said heater so that the cleaning water is within a preset temperature range corresponding to the fruit cleaning mode.

18. A fruit cleaning method as claimed in claim 17 further comprising the step of detecting the temperature of the cleaning water, wherein said heater is controlled according to the detected temperature.

19. A fruit cleaning method as claimed in claim 17 wherein said hater does not operate so that cold cleaning water is supplied to said basket in the selected fruit cleaning mode.
